**Europäisches Patentamt**

**European Patent Office**

**Office européen des brevets**

(19)

(11) Veröffentlichungsnummer: **0 063 210**
**B1**

# (12) EUROPÄISCHE PATENTSCHRIFT

(45) Veröffentlichungstag der Patentschrift:
**10.04.85**

(21) Anmeldenummer: **82100823.2**

(22) Anmeldetag: **05.02.82**

(51) Int. Cl.⁴: **G 02 B 7/11,** G 02 B 13/16

(54) **Fokussiereinrichtung.**

(30) Priorität: **21.04.81 CH 2596/81**

(43) Veröffentlichungstag der Anmeldung:
**27.10.82 Patentblatt 82/43**

(45) Bekanntmachung des Hinweises auf die Patenterteilung:
**10.04.85 Patentblatt 85/15**

(84) Benannte Vertragsstaaten:
**AT CH DE FR GB IT LI NL SE**

(56) Entgegenhaltungen:
**DE - A - 2 743 175**

(73) Patentinhaber: **SIEMENS-ALBIS
AKTIENGESELLSCHAFT, EGA1/Verträge und Patente
Postfach, CH-8047 Zürich (CH)**

(72) Erfinder: **Tschannen, Gottfried,
Seebahnstrasse 177/153, CH-8004 Zürich (CH)**

EP 0 063 210 B1

## Beschreibung

Die vorliegende Erfindung betrifft eine Fokussiereinrichtung für ein Wärmebildgerät gemäss dem Oberbegriff des Patentanspruchs 1.

Zur Fernbedienung von beweglichen Maschinen- oder Apparateelementen werden vielfach Nachlaufsteuerungen mit einem Motor eingesetzt, der nicht nur die gewünschten Elemente sondern auch die Achse eines Potentiometers in Bewegung versetzt. Durch das Potentiometer wird eine Spannung geregelt, die mit der an einem Regelpotentiometer am Bedienungsort abgegebenen Spannung in einem Komparator verglichen wird. Je nachdem, ob die Ausgangsspannung des Komparators positiv oder negativ ist, wird dann der Motor in der einen oder anderen Richtung rotieren, bis sich die Spannungen an den Ausgängen beider Potentiometer angeglichen haben, wodurch sich ihre Einstellungen derart entsprechen, dass eine bequeme Fernbedienung von Hand möglich wird. Die Anwendung einer solchen Nachlaufsteuerung für die Scharfeinstellung des sehr temperaturabhängigen Linsensystems eines Wärmebildgerätes erweist sich indessen als nachteilig, da bei jeder Temperaturänderung die einmal gewonnene Scharfeinstellung verloren geht, so dass das Linsensystem immer wieder neu scharf eingestellt werden muss, wenn sich die Temperatur auch nur relativ wenig geändert hat.

Die Erfindung zeigt einen Weg, um zu einer Fokussiereinrichtung zu gelangen, die es gestattet, dass auch bei relativ grossen Temperaturschwankungen die einmal erreichte Scharfeinstellung erhalten bleibt. Dies wird erfindungsgemäss durch die im kennzeichnenden Teil des Anspruchs 1 angegebenen Massnahmen erreicht. Weitere vorteilhafte Ausgestaltungen der Erfindung sind in weiteren Patentansprüchen angegeben.

Die Erfindung wird nachfolgend durch Beschreibung von Ausführungsbeispielen anhand von Zeichnungen näher erläutert. Es zeigen:

Fig. 1 das Blockschaltbild einer Fokussiereinrichtung.

Fig. 2 das Schaltbild einer Treiberstufe zu einer solchen Fokussiereinrichtung.

Fig. 3 das Blockschaltbild einer weiteren Ausführung einer Fokussiereinrichtung nach der Erfindung.

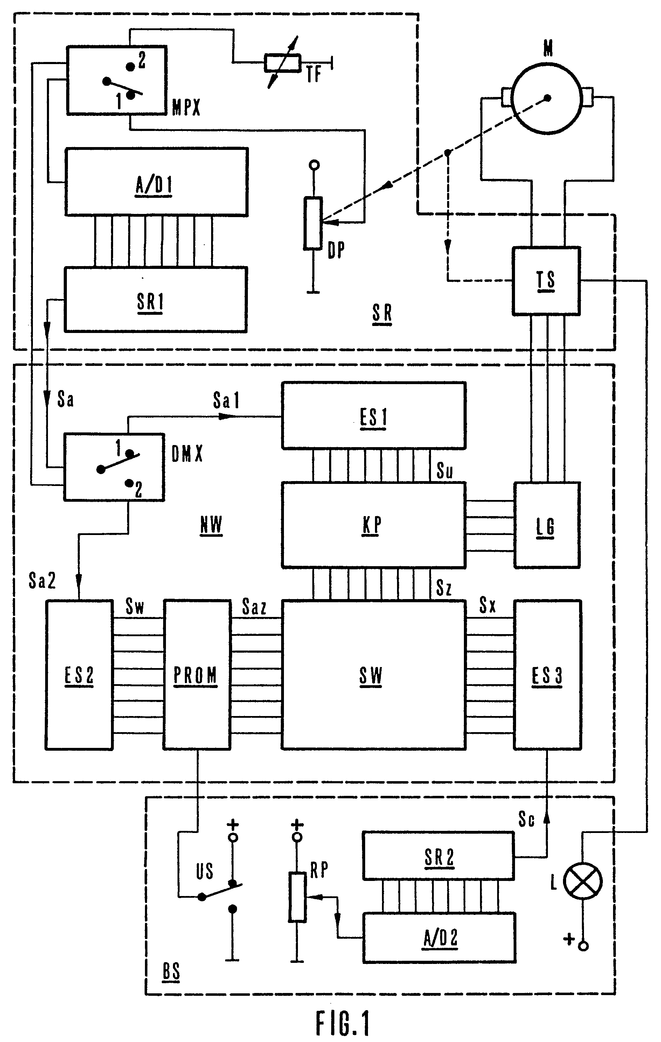

Die Fokussiereinrichtung nach Fig. 1 besteht aus einem Sensor SR, einer Komparatorschaltung NW und einer Bedienungsschaltung BS, die sich relativ weit entfernt vom Sensor SR und von einem Motor M befinden kann, mit dem die Scharfeinstellung des Linsensystems eines Wärmebildgerätes betätigt wird.

Der Sensor SR weist einen Multiplexer MPX auf, mit dessen Hilfe der Eingang eines Analog/Digital-Wandlers A/D1 entweder mit dem Ausgangssignal eines Temperaturfühlers TF oder mit der Ausgangsspannung eines Einstellpotentiometers, beispielsweise eines Drehpotentiometers DP, beaufschlagt wird, dessen Achse durch den Motor M einstellbar ist. Dabei kann der Multiplexer MPX dem Analog/Digital-Wandler A/D1 auch andere zeitlich verschachtelte Signale abgeben, die für andere Zwecke dienlich sein können. Die beispielsweise acht Ausgänge für ein 8-Bit-Signal des Analog/Digital-Wandlers A/D1 sind mit ihnen zugeordneten Eingängen eines Sende-Schieberegisters SR1 verbunden. Der Sensor SR weist zudem eine Treiberstufe TS auf, deren Ausgänge die Speisespannung des Motors M liefern. Die Komparatorschaltung NW, die in der Form eines digitalen Normwandlers aufgebaut ist, weist einen eingangsseitig mit dem Ausgangssignal Sa des Schieberegistesr SR1 beaufschlagten Demultiplexer DMX auf, der das digital umgewandelte Signal des Drehpotentiometers DP auf ein erstes Empfangs-Schieberegister ES1 und das digital umgewandelte Signal des Temperaturfühlers TF auf ein zweites Empfangs-Schieberegister ES2 verteilt. Im Normwandler NW ist ausserdem ein Summierwerk SW mit zwei 8-Bit-Eingängen vorhanden, von denen der eine mit dem 8-Bit-Ausgangssignal Sx eines weiteren Schieberegisters ES3 und der andere über einen Festwertspeicher PROM mit dem 8-Bit-Ausgangssignal SW des Schieberegisters ES2 beaufschlagt ist. Der 8-Bit-Ausgang des Summierwerkes SW ist mit einem ersten 8-Bit-Eingang eines Komparators KP verbunden, dessen zweiter 8-Bit-Eingang mit dem 8-Bit-Ausgangssignal Su des Schieberegisters ES1 beaufschlagt ist. Der Komparator KP ist ausgangsseitig über eine 4-Bit-Leitung mit dem Eingang einer Logikschaltung LG verbunden, deren Ausgang ein 3-Bit-Signal abgibt, das den Eingängen der Treiberstufe TS zugeführt wird. Die Bedienungsschaltung BS weist ein Regelpotentiometer RP mit einer verschiebbaren Mittelabzapfung auf, aus der eine Regelspannung entnommen wird, die dem Eingang eines Analog/Digital-Wandlers A/D2 zugeführt wird, deren acht Ausgänge mit acht entsprechenden Eingängen eines Sende-Schieberegisters SR2 verbunden sind, dessen Ausgangssignal Sc dem Eingang des Empfangs-Schieberegisters ES3 zugeführt wird. Die Bedienungsschaltung BS weist ausserdem eine von der Treiberstufe TS ein- oder ausschaltbare Lampe L und einen Umschalter US auf, mit dessen Hilfe ein weiterer Eingang des Festwertspeichers PROM mit einem «1»- oder mit einem «0»-Signal beaufschlagt werden kann.

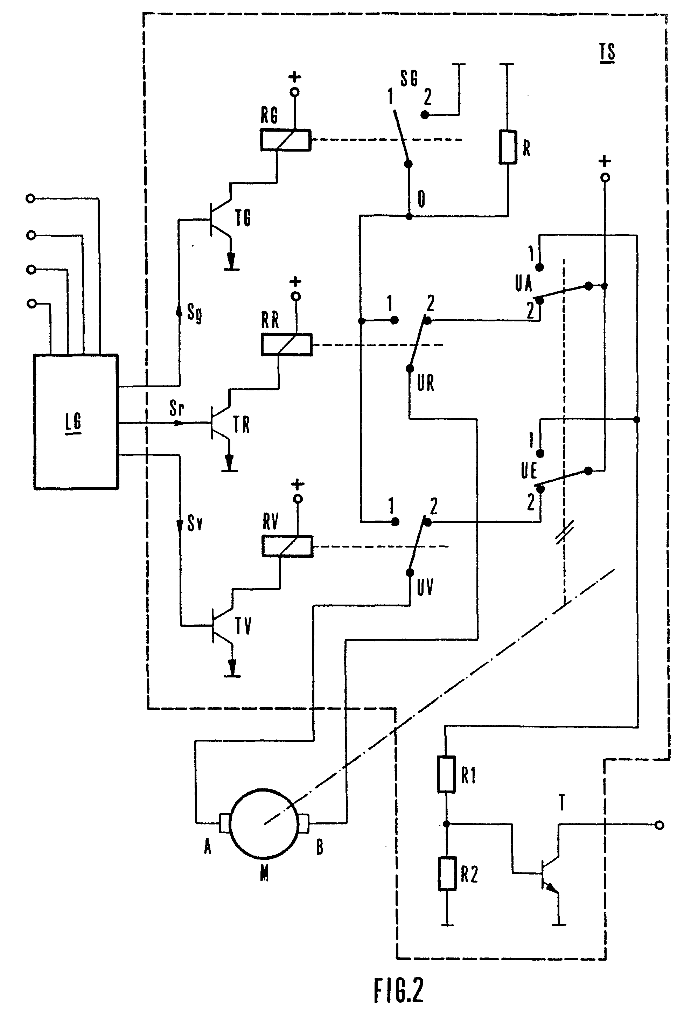

Die Treiberstufe nach Fig. 2 weist drei Relais RG, RR und RV auf, die jeweils zwischen dem Pluspol einer Speisespannungswelle und dem Ausgang von je einem Treiber TG, TR bzw. TV eingefügt sind, die auf einem Bezugspotential liegen. Die Eingänge dieser Treiber sind mit je einem Signal Sg, Sr bzw. Sv beaufschlagt. Das Relais RG betätigt einen Schalter SG und die Relais RR und RV je einen Umschalter UR und UV. Die Treiberstufe weist zudem zwei Umschalter UA und UE auf, die jeweils von der Motordrehachse in ihrer Bewegung beim Erreichen einer Endposition betätigt werden. Dabei ist Position 1 beider Umschalter UA und UE gemeinsam über einen durch zwei Widerstände R1 und R2 gebildeten Spannungsteiler an einem Bezugspotential angeschlossen. Die mittlere Anzapfung des Spannungsteilers ist mit der Basis eines Transistors T verbunden, der als Schalter für die Lampe L (Fig. 1) dient. Die Fokussiereinrichtung nach den Fig. 1 und 2 funktioniert folgendermassen:

Die Multiplexer MPX und DMX sind derart synchronisiert, dass entweder der Multiplexer MPX mit dem Drehpotentiometer DP und der Demultiplexer DMX mit dem Schieberegister ES1 oder der Multiplexer MPX mit dem Temperaturfühler TF und der Demultiplexer DMX mit dem Schieberegister ES2 verbunden ist. Im ersten Fall sind beide Multiplexer in der Position 1 und im zweiten Fall in der Position 2. Der Demultiplexer DMX gibt demzufolge in der Position 1 ein Signal Sa1 und in der Position 2 ein Signal Sa2 ab. Das Ausgangssignal Sc des Schieberegisters SR2 der Bedienungsschaltung BS erscheint als Parallelausgangssignal Sx des Schieberegister ES3. Das Signal Sw wird vom Festwertspeicher PROM in ein Signal Saz transformiert. Durch das Summierwerk SW werden diese Signale Saz und Sx addiert und als Summensignal Sz abgegeben. Der Komparator KP vergleicht die Signale Su und Sz. Die Logikschaltung LG unterscheidet folgende Fälle

a) SU > Sz
b) Su < Sz
c) |Su-Sz| > SL
d) Su = Sz

worin SL ein Grenzwert ist.

Im Fall a) gibt die Logikschaltung LG (Fig. 2) ein Signal Sr = «0» und ein Signal Sv = «1» ab, so dass der Motor M in der einen Richtung läuft; dann ist der Anschluss A des Motors M über den Umschalter UV in seiner Position 1 mit dem einen Anschluss Q eines Widerstandes R verbunden, dessen anderer Anschluss an einem Bezugspotential liegt. Der Anschluss B des Motors M ist über die Umschalter UR und UA in ihren Positionen 2 an einer Referenzspannungsquelle angeschlossen.

Im Fall b) gibt die Logikschaltung LG ein Signal Sr = «1» und ein Signal Sv = «0» ab, so dass der Motor in der anderen Richtung läuft; dann ist der Anschluss B des Motors M über den Umschalter UR in seiner Position 1 an den Anschluss Q und der Anschluss A des Motors M über die Umschalter UV und UE in ihren Positionen 2 an die Referenzspannungsquelle angeschlossen.

Im Fall c) gibt die Logikschaltung LG ein Signal Sg = «0» ab, das den Motor M in einen schnelleren Gang versetzt. In diesem Fall ist der Widerstand R über den Schalter SG in seiner Position 2 kurzgeschlossen. Anstelle des Widerstandes R kann der Schalter SG auch zwischen zwei Speisespannungen umschalten.

Im Fall d) ist die Scharfeinstellung erreicht. Die Logikschaltung gibt die Signale Sv = «0» und Sr = «0» ab, und der Motor bleibt still. In diesem Fall ist die Rotorwicklung des Motors kurzgeschlossen, so dass der Motor schnell bremst.

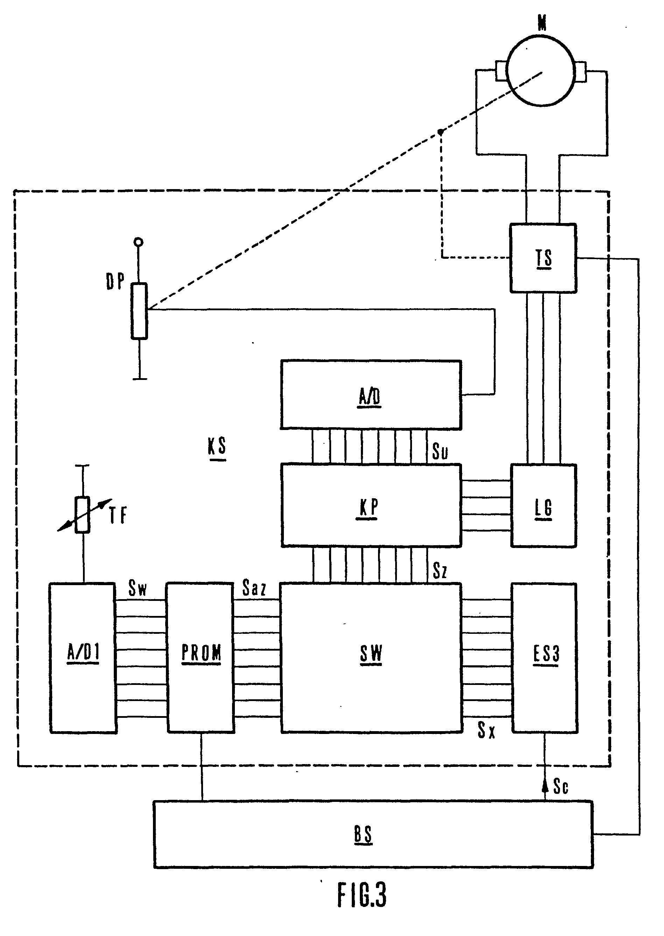

Die Fokussiereinrichtung nach Fig. 3 weist eine den Normwandler NW und den Sensor SR nach Fig. 1 zusammenfassende Komparatorschaltung KS auf, die jedoch keinen Multiplexer MPX, Demultiplexer DMX und Schieberegister ES1, dafür aber einen zusätzlichenn Analog/Digital-Wandler A/D aufweist. Der Temperaturfühler TF in Fig. 3 ist über den Analog/Digital-Wandler A/D1 mit den Eingängen des Festwertspeichers PROM verbunden. Die mittlere Anzapfung des Drehpotentiometers DP ist dem Eingang des Analog/Digital-Wandlers A/D zugeführt, dessen Parallelausgänge mit den Paralleleingängen des Komparators KP verbunden sind. Die Arbeitsweise der Fokussiereinrichtung nach Fig. 3 ist dieselbe wie die in Fig. 1, jedoch ohne Multiplexierung der Signale.

Der Temperaturfühler TF kann eine nichtlineare Charakteristik aufweisen, die die Nichtlinearität des temperaturabhängigen Linsensystems kompensiert. Dies kann beispielsweise unter anderem mit einer Kombination von nichtlinearen Elementen wie NTC- und PTC-Widerständen erreicht werden. In einem solchen Fall kann der Festwertspeicher PROM entfallen. Häufig wird es jedoch bequemer sein, den Festwertspeicher PROM für eine feine Temperaturkompensation vorzusehen und als Temperaturfühler TF eine einfache, gegebenenfalls mit einem einzigen NTC- oder PTC-Widerstand versehene, Schaltung zu verwenden.

Das Spannungssignal Sx des Regelpotentiometers RP kann über einen weiteren Festwertspeicher PROM den Paralleleingängen des Summierwerkes SW zugeführt werden.

**Patentansprüche**

1. Fokussiereinrichtung mit einem Einstellpotentiometer, dessen Achse durch einen zur Scharfeinstellung des Linsensystems eines Wärmebildgerätes dienenden Motor einstellbar ist, und mit einem Komparator, der die Spannung am Einstellpotentiometer mit der Spannung an einem Regelpotentiometer vergleicht, woraus ein Steuersignal für den Motor erzeugt wird, dadurch gekennzeichnet, dass ein digitaler Komparator (KP) vorgesehen ist, der das digital umgewandelte Spannungssignal (Su) am Einstellpotentiometer (DP) mit dem digitalen Ausgangssignal (Sz) eines Summierwerkes (SW) vergleicht, in dem das digital umgewandelte Spannungssignal (Sx) des Regelpotentiometers (RP) und das digital umgewandelte Ausgangssignal (Sw) eines Temperaturfühlers (TF) addiert werden.

2. Fokussiereinrichtung nach Anspruch 1, dadurch gekennzeichnet, dass das Ausgangssignal (Sw) des Temperaturfühlers (TF) über einen Festwertspeicher (PROM) den Paralleleingängen des Summierwerkes (SW) zugeführt ist.

3. Fokussiereinrichtung nach Anspruch 1, dadurch gekennzeichnet, dass das Spannungssignal (Sx) des Regelpotentiometers (RP) über einen Festwertspeicher (PROM) den Paralleleingängen des Summierwerkes (SW) zugeführt ist.

4. Fokussiereinrichtung nach einem der Ansprüche 1 bis 3, dadurch gekennzeichnet, dass ein mit einem Multiplexer (MPX) synchronisierter Demultiplexer (DMX) vorhanden ist, der über den Multiplexer (MPX) und einen Coder (A/D1, SR1) entweder eine Spannung am Einstellpotentiometer (DP) als digitales Spannungsmesssignal (Sa1) dem Eingang eines ersten Schieberegisters (ES1) oder eine Spannung an einem Temperaturfühler (TF) als digitales Temperaturmesssignal (Sa2) dem Eingang eines zweiten Schieberegisters (ES2) zuführt, und dass die Spannung am Regelpotentiometer (RP) über einen zweiten Coder (A/D2, SR2) dem Eingang eines dritten Schieberegisters (ES3) zugeführt wird, dessen Parallelausgangssignale (Sx) mit den Parallelausgangssignalen (Sw) des zweiten Schieberegisters (ES2) im Summierwerk (SW) addiert werden, dessen Parallelausgangssignale (Sz) im Komparator (KP) mit den Parallelausgangssignalen (Su) des ersten Schieberegisters (ES1) verglichen werden.

5. Fokussiereinrichtung nach einem der Ansprüche 1 bis 4, dadurch gekennzeichnet, dass um einen Bremseffekt zu bewirken das digital vorliegende Steuersignal für den Motor beim Erreichen der Scharfeinstellung mindestens zwei Umschalter (UR, UV) derart steuert, dass die Rotorwicklung des Motors (M) kurzgeschlossen ist.

**Claims**

1. A focusing device with a setting potentiometer whose axis can be adjusted by a motor to focus the lens system of a heat image device, and with a comparator which compares the voltage across the setting potentiometer with the voltage across a regulating potentiometer to produce a control signal for the motor, characterised in that a digital comparator (KP) is provided which compares the digitally converted voltage signal (Su) across the setting potentiometer (DP) with the digital output signal (Sz) of an adder (SW) in which the digitally converted voltage signal (Sx) of the regulating potentiometer (RP) and the digitally converted output signal (Sw) of a temperature sensor (TF) are added.

2. A focusing device as claimed in Claim 1, characterised in that the output signal (Sw) of the temperature sensor (TF) is fed via a read-only memory (PROM) to the parallel inputs of the adder (SW).

3. A focusing device as claimed in Claim 1, characterised in that the voltage signal (Sx) of the regulating potentiometer (RP) is fed via a read-only memory (PROM) to the parallel inputs of the adder (SW).

4. A focusing device as claimed in one of Claims 1 to 3, characterised in that a demultiplexer (DMX) synchronised with a multiplexer (MPX) is provided, and via the multiplexer (MPX) and a coder (A/D1, SR1), either conducts a voltage across the setting potentiometer (DP) to the input of a first shift register (ES1) as digital voltage measurement signal (Sa1), or conducts a voltage across a temperature sensor (TF) to the input of a second shift register (ES2) as digital temperature measurement signal (Sa2), and that the voltage across the regulating potentiometer (RP) is fed via a second coder (A/D2, SR2) to the input of a third shift register (ES3) whose parallel output signals (Sx) are added to the parallel output signals (Sw) of the second shift register (ES2) in the adder (SW), whose parallel output signals (Sz) are in turn compared in the comparator (KP) with the parallel output signals (Su) of the first shift register (ES1).

5. A focusing device as claimed in one of Claims 1 to 4, characterised in that to bring about a braking effect when focusing is achieved, the control signal for the motor, which occurs in digital form, controls at least two change-over switches (UR, UV) such that the rotor winding of the motor (M) is short-circuited.

**Revendications**

1. Dispositif de focalisation avec un potentiomètre d'adjustment dont l'axe est ajustable par un moteur servant au réglage fin d'un système de lentilles d'un appareil à image par rayonnement thermique, et avec un comparateur qui compare la tension du potentiomètre d'adjustement avec la tension d'un potentiomètre de régulation, d'où se produit un signal de commande pour le moteur, caractérisé en ce qu'est prévu un comparateur numérique (KP) qui compare le signal numérique converti de la tension (Su) au potentiomètre d'adjustement avec le signal numérique de sortie (Sz) d'un totalisateur (SW), dans lequel le signal numérique converti de la tension (Sx) du potentiomètre de régulation (RP) et le signal numérique converti (Sw) sortant d'une sonde de température (TF) sont additionés.

2. Dispositif de focalisation selon la revendication 1, caractérisé en ce que le signal (Sw) sortant de la sonde de température (TF) est appliqué, par l'intermédiaire d'une mémoire permanente (PROM), aux entrées parallèles du totalisateur (SW).

3. Dispositif de focalisation selon la revendication 1, caractérisé en ce que le signal de la tension (Sx) du potentiomètre de régulation (RP) est appliqué, par l'intermédiaire d'une mémoire permanente (PROM), aux entrées parallèles du totalisateur (SW).

4. Dispositif de focalisation selon l'une des revendications 1 à 3, caractérisé en ce qu'il est prévu un démultiplexeur (DMX) synchronisé avec un multiplexeur (MPX) qui, par l'intermédiaire du multiplexeur (MPX) et d'un codeur (A/D1, SR1) amène une tension au potentiomètre d'adjustement (DP) comme signal numérique de mesure de la tension (Sa1) à l'entrée d'un premier registre à décalage (ES1) ou une tension à une sonde de température (TF) comme signal numérique de mesure de la température (Sa2) à l'entrée d'un deuxième registre à décalage (ES2), et en ce que la tension au potentiomètre de régulation (RP) est, par l'intermédiaire d'un second codeur (A/D2, SR2), amenée à l'entrée d'un troisième registre à décalage (ES3) dont les signaux parallèles de sortie (Sx) sont additionnés avec les signaux parallèles de sortie (Sw) du deuxième registre à décalage (ES2) dans le totalisateur (SW), dont les signaux parallèles de sortie (Sz) sont comparés dans le comparateur (KP) avec les signaux parallèles de sortie (Su) du premier registre à décalage (ES1).

5. Dispositif de focalisation selon l'une des revendications 1 à 4, caractérisé en ce que, pour produire un effet de freinage, le signal numérique de commande qui est présent pour le moteur commande, lorsqu'un adjustement précis est obtenu, au moins deux inverseurs (UR, UV) de manière que l'enroulement du rotor du moteur (M) est mis en court-circuit.

FIG.1

FIG.2

FIG.3